# EUROPEAN PATENT APPLICATION

(11) **EP 4 792 944 A1**
(43) Date of publication of application: **19.08.2026**
(21) Application number: 25837585.6
(22) Date of filing: 30.06.2025
(51) Int. Cl.: B08B 1/14, B08B 1/34, B08B 1/52, B08B 3/08, H01M 4/04

(54) **APPARATUS FOR CLEANING ELECTRODE ROLLING ROLL**

(30) Priority: 09.07.2024 KR 20240090144
(71) Applicant: LG Energy Solution, Ltd., Seoul 07335 (KR)
(72) Inventor: CHOI, Jaehyuk, Daejeon 34122 (KR); MIN, Byoungsu, Daejeon 34122 (KR); KIM, Insu, Daejeon 34122 (KR); HONG, Soohyung, Daejeon 34122 (KR); KIM, Do Hun, Daejeon 34122 (KR); CHU, Hyunkyung, Daejeon 34122 (KR); SHIN, Gichang, Daejeon 34122 (KR); SEOL, Jeong Soo, Daejeon 34122 (KR)
(74) Representative: Plasseraud IP
(86) International application number: PCT/KR2025/009162
(87) International publication number: WO 2026/014783

(57) **Abstract**

According to one embodiment of the present disclosure, provided is a device for cleaning an electrode rolling roll, comprising:
a cleaning member provided so as to allow a surface of the electrode rolling roll to come into contact with a cleaning cloth,
a spray nozzle that sprays a cleaning liquid onto the cleaning cloth,
a control unit that adjusts the sprayed amount of the cleaning liquid, and
a monitoring unit that monitors the sprayed amount of the cleaning liquid,
wherein the cleaning liquid is a distilled water, and
wherein the control unit adjusts the amount of the cleaning liquid sprayed once by the spray nozzle so as to be within a range of 0.05 ml to 0.2 ml.

## Description

### TECHNICAL FIELD

The present disclosure relates to a device for cleaning an electrode rolling roll, and more particularly, to a cleaning device with an improved cleaning liquid supply system during the cleaning of rolling rolls.

### BACKGROUND

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Presently, commercially available secondary batteries include nickel-cadmium batteries, nickel-hydrogen batteries, nickel-zinc batteries, and lithium secondary batteries. Of these batteries, the lithium secondary battery has come into the spotlight because they have advantages, for example, being freely charged and discharged, and having very low selfdischarge rate and high energy density.

A lithium secondary battery primarily uses a lithium-based oxide and a carbon material as a positive electrode active material and a negative electrode active material respectively. The lithium secondary battery includes an electrode assembly in which a positive electrode plate and a negative electrode plate respectively coated with the positive electrode active material and the negative electrode active material are disposed with a separator interposed therebetween, and an exterior material, i.e., battery case, which hermetically houses the electrode assembly together with an electrolyte solution.

Such secondary batteries are widely used in not only small devices such as portable electronic devices, but also medium- and large-scale devices such as vehicles and energy storage systems, and the extent of its use is rapidly increasing. Moreover, recently, there has been a growing trend of utilizing residential battery packs for electricity storage purposes.

The manufacturing process of such a lithium secondary battery is roughly classified into an electrode process, an assembly process, and a formation process. The electrode process may be divided into an active material mixing process, an electrode coating process, a rolling process, a slitting process, a winding process, and the like. Among them, the rolling process is a process of passing an electrode substrate between a pair of rolling rolls heated to high temperature and compressing it to a desired thickness, in order to reduce the thickness of the electrode substrate having finished the coating process, thereby increasing capacity density, and to increase the adhesion between the electrode current collector and the electrode active material.

In this rolling process, while rolling is repeatedly performed, if the active materials or other foreign matters remaining after rolling are attached to the rolls during rolling, the foreign matters may attach to the electrode in the subsequent rolling process, thereby deteriorating the quality of the electrode and the battery including the same. As such, a device for cleaning a rolling roll by removing contaminants of the rolling rolls is used.

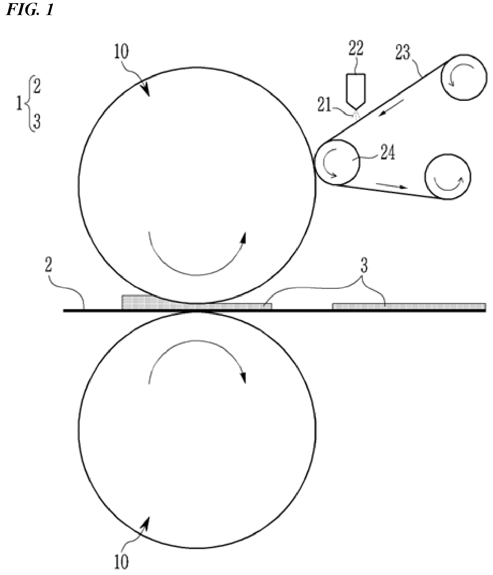

FIG. 1 shows a conventional rolling roll cleaning device used in the rolling process. An electrode 1 having an electrode mixture layer 3 applied onto a current collector 2 passes between a pair of rolling rolls 10. The electrode mixture layer 3 includes an electrode active material, a conductive material, and a binder.

In a conventional electrode rolling roll cleaning device, a method was used in which a cleaning liquid 21 is sprayed onto a cleaning cloth 23 through a nozzle 22 while the rolling roll 10 is in operation, and the cleaning cloth 23 passes through the cleaning roller 24, and the rolling roll 10 is wiped with the cleaning cloth 23 on which the cleaning liquid has been sprayed, thereby manufacturing an electrode.

At this time, when the rolling roll is cleaned during the process of manufacturing the electrode 1 while the rolling roll 10 is in operation, the type and amount of cleaning liquid 21 are limited to maintain the residual moisture content in the electrode 1, and oil-based cleaning liquids containing oil components are mainly used.

Meanwhile, when using a conventional electrode rolling roll cleaning device, a nonoperating time of the rolling roll 10 occurs due to the characteristics of using an oil-based cleaning liquid, cleaning is not performed properly at the time of electrode rolling using an aqueous solvent, and also the rolling roll 10 may not be properly cleaned while the cleaning liquid 21 sprayed onto the cleaning cloth 23 evaporates/dries.

Therefore, research has been conducted in the direction of using water as a cleaning liquid, but in this case, there are limitations due to problems such as an increase in electrode thickness and moisture, and detachment of active materials.

### DETAILED DESCRIPTION OF THE INVENTION

### Technical Problem

It is an object of the present disclosure to provide a cleaning device with an improved supply system that can solve problems that have previously occurred even while using distilled water as a cleaning liquid during the cleaning of electrode rolling rolls.

However, the technical objects to be solved by embodiments of the present disclosure are not limited to the above-described objects, and can be variously expanded within the scope of the technical idea included in the present disclosure.

### Technical Solution

According to an aspect of the present disclosure, there is provided a device for cleaning an electrode rolling roll, comprising:
a cleaning member provided so as to allow a surface of the electrode rolling roll to come into contact with a cleaning cloth,
a spray nozzle that sprays a cleaning liquid onto the cleaning cloth,
a control unit that adjusts the sprayed amount of the cleaning liquid, and
a monitoring unit that monitors the sprayed amount of the cleaning liquid.
wherein the cleaning liquid is a distilled water, and
wherein the control unit adjusts the amount of the cleaning liquid sprayed once by the spray nozzle so as to be within a range of 0.05 ml to 0.2 ml.

The electrode rolling roll may comprise an upper rolling roll located on the upper side and a lower rolling roll located on the lower side, on the basis of the electrode.

The electrode rolling roll may be a hard chrome rolling roll, or a DLC (diamond like carbon) rolling roll.

The cleaning cloth may be a non-woven fabric.

The cleaning member may come into contact with the cleaning cloth at 20 to 60% of the total width length based on the widthwise direction of the electrode rolling roll.

The cleaning member may have an attachment pressure of 1.7 kg/cm to 2.0 kg/cm when a cleaning cloth is attached to the electrode rolling roll.

The spray nozzle may be a spray-type one-fluid nozzle.

The control unit may adjust the amount of the cleaning liquid sprayed once by the spray nozzle so as to be within the range of 0.05 ml to 0.1 ml.

The control unit comprises a flow meter, and may issue a command so as to increase the amount of the cleaning liquid sprayed by the spray nozzle if the amount is less than 0.05 ml, and issue a command so as to decrease the amount of the cleaning liquid if the amount exceeds 0.2 ml.

The monitoring unit may monitor the amount of cleaning liquid sprayed by the spray nozzle and transmit information to the control unit.

The device for cleaning an electrode rolling roll may further comprise: a cleaning cloth supply unit that supplies the cleaning cloth; and a cleaning cloth recovery unit that recovers the cleaning cloth.

### BRIEF DESCRIPTION OF THE DRAWINGS

FIG. 1 shows a conventional rolling roll cleaning device used in the rolling process of the electrode.
FIG. 2 is a schematic diagram of an electrode rolling roll cleaning device according to one embodiment of the present disclosure.
FIG. 3 is a schematic diagram of an electrode rolling roll cleaning device of FIG. 2 in another direction.
FIG. 4 is a comparative photograph showing the attachment uniformity of a rolling roll and a cleaning member of the conventional cleaning device and the cleaning device according to the present disclosure according to Experimental Example 1.
FIG. 5 is photographs comparing the nozzle spray shapes of the rolling roll and the cleaning member of the conventional cleaning device and the cleaning device according to the present disclosure according to Experimental Example 1.
FIG. 6 is a graph showing the change in electrode thickness rolled using the electrode rolling roll cleaned by the cleaning device of Example 1 according to Experimental Example 3.
FIG. 7 is a graph showing the change in electrode thickness rolled using the electrode rolling roll cleaned by the cleaning device of Comparative Example 6 according to Experimental Example 3.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Now, specific embodiments of the present disclosure will be described with reference to the drawings.

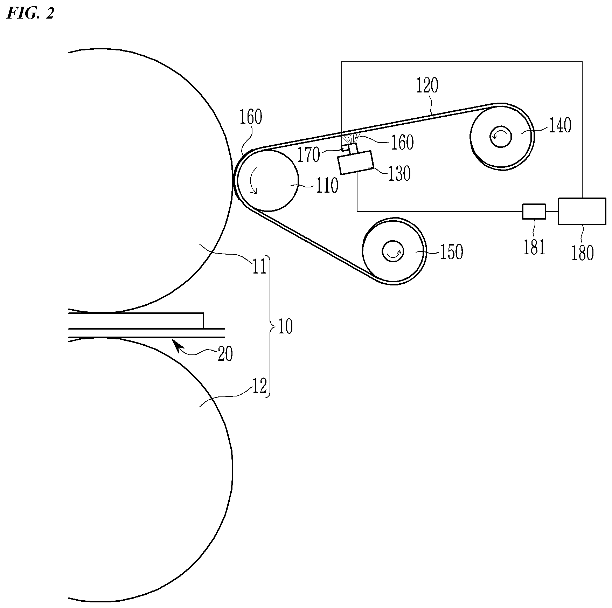

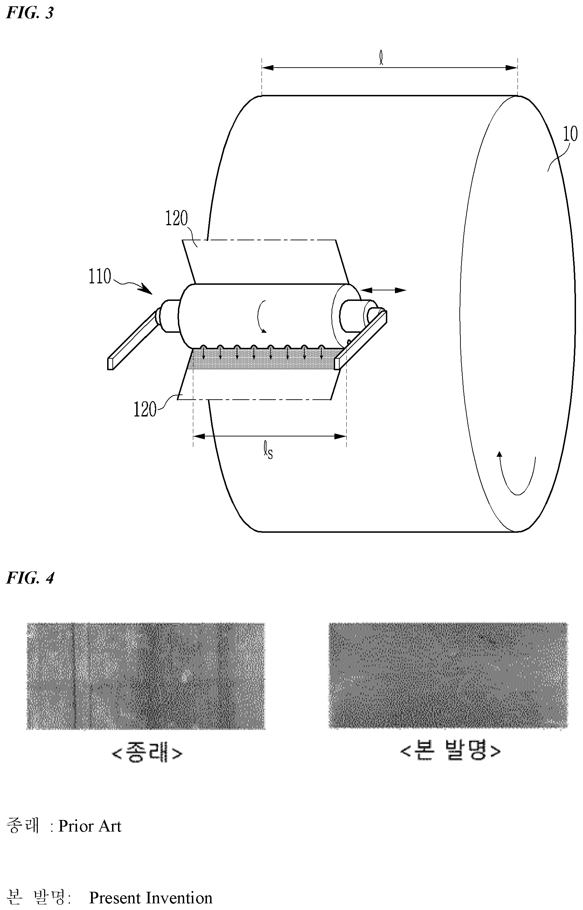

FIG. 2 is a schematic diagram of an electrode rolling roll cleaning device according to one embodiment of the present disclosure, and FIG. 3 is a schematic diagram of an electrode rolling roll cleaning device of FIG. 2 in another direction.

Referring to FIGS. 2 and 3 together, a rolling roll cleaning device according to one embodiment of the present disclosure largely includes a cleaning member 110, a cleaning cloth 120, and a spray nozzle 130 that sprays a cleaning liquid 160 onto the cleaning cloth 120.

Since the cleaning member 110 must first remove foreign matters attached to the surface of the electrode rolling roll 10 after rolling the electrode 20, it is located closest to the point where the electrode rolling roll 10 rolls the electrode, based on the rotation direction of the electrode rolling roll 10.

Here, the electrode rolling roll 10 includes an upper rolling roll 11 located on the upper side and a lower rolling roll 12 located on the lower side, on the basis of the electrode 20.

At this time, if the electrode 20 forms an electrode layer on only one side of the current collector, the cleaning device can be located and operated at the part where the electrode layer is formed, and if the electrode forms an electrode layer on both sides, the cleaning device can be formed and operated on both sides so that both the upper rolling roll 11 and the lower rolling roll 12 can be cleaned.

The type of the electrode rolling roll 10 to which the cleaning device according to the present disclosure can be applied is not limited, and an example thereof may be a hard chrome rolling roll, or a DLC (diamond like carbon) rolling roll.

The cleaning member 110 may be, for example, in the shape of a cleaning roll (roller), and may rotate, for example, in the direction opposite to the rotational direction of the rolling roll 10. If the contact portion between the cleaning member 110 and the rolling roll 10 is rounded, the rolling roll 10 can be prevented from being damaged by the cleaning cloth 120 when the cleaning cloth 120 comes into contact with the rolling roll 10.

In addition, the cleaning member 110 may be a cleaning roll configured to be movable in the widthwise direction of the electrode rolling roll 10. Therefore, the length lₛ of contact between the electrode rolling roll 10 and the cleaning cloth 120 may be formed to be 20 to 60%, more specifically 20 to 40%, of the total width length l based on the widthwise direction of the electrode rolling roll 10.

Thereby, the cleaning member 110 may be uniformly attached to the electrode rolling roll 10 as a whole.

In the existing cleaning device, the cleaning member is attached to the entire width of the electrode rolling roll, which causes a problem that especially as the width length increases, the attachment pressure in the widthwise direction is non-uniform and the attachment pressure decreases, so that cleaning is not performed properly.

However, according to the present disclosure, the width of the cleaning member 110 is reduced so that it is formed only on a portion of the electrode rolling roll 10 based on the widthwise direction, and it is configured to be movable in the widthwise direction, so that the pressure at which the cleaning member 110 is attached to the electrode rolling roll 10 may be uniform in the widthwise direction, and the attachment pressure can also be improved.

Therefore, according to the present disclosure, when the cleaning member 110 attaches the cleaning cloth 120 to the electrode rolling roll 10, the attachment pressure may be 1.7 kg/cm to 2.0 kg/cm, specifically 1.8 kg/cm to 2.0 kg/cm, and more specifically 1.9 kg/cm to 2.0 kg/cm, so that the cleaning effect can be improved.

Furthermore, the present disclosure is not limited to those shown in figures, and any structure and shape that can supply the cleaning cloth 120 to the cleaning member 110 to clean the surface of the electrode rolling roll 10 is sufficient, and can be modified and changed in various different ways according to the environment to which the present disclosure is applied. In addition, the cleaning member 110 may be provided as one capable of moving in the widthwise direction as shown in the schematic diagram of FIG. 3, but may be provided as two or more in the circumferential direction of the electrode rolling roll 10, and may be formed at different positions in the widthwise direction so that cleaning is completely performed in the widthwise direction of the electrode rolling roll 10. The number of the cleaning member 110 is not particularly limited.

Meanwhile, according to embodiments of the present disclosure, the cleaning cloth 120 is supplied from the cleaning cloth supply unit 140 and transferred to the cleaning member 110. For example, the cleaning cloth supply unit 140 may be one in which a long sheet-like cleaning cloth 120 is wound in a roll shape, and the cleaning cloth 120 unwound from the cleaning cloth supply unit 140 may be transferred to the cleaning member 110. The cleaning member 110 is located adjacent to the surface of the electrode rolling roll 10, so that one surface of the cleaning cloth 120 may be brought into contact with the electrode rolling roll 10. That is, the cleaning cloth 120 comes into contact with the electrode rolling roll 10 while passing between the electrode rolling roll 10 and the cleaning member 110 to thereby clean the electrode rolling roll 10.

The cleaning cloth 120 passed the cleaning member 110 is recovered at the cleaning cloth recovery unit 150. For example, the cleaning cloth recovery unit 150 may be configured to wind the cleaning cloth 120 in a roll shape. In other words, each of the cleaning cloth supply unit 140 and the cleaning cloth recovery unit 150 may be fabricated, for example, in the form of a cylindrical bar or bobbin to unwind and wind the cleaning cloth 120. The cleaning member 110 may rotate simultaneously according to the moving direction of the cleaning cloth 120, and the cleaning cloth supply unit 140 and the cleaning cloth recovery unit 150 may also rotate in the same manner.

The cleaning cloth 120 can smoothly absorb or remove foreign matters attached to the electrode rolling roll 10, and the type thereof is not limited as long as it does not damage the surface of the electrode rolling roll 10, and for example, a nonwoven fabric may be used. Further, the type of the material of the non-woven fabric is not limited as long as it can absorb or remove foreign matters, and a cotton fiber, a polyethylene fiber, a polypropylene fiber, polyester, an aramid fiber, a cellulose fiber, a rayon fiber, or a non-woven fabric mixed with these materials may be used.

The rolling roll cleaning device according to one embodiment of the present disclosure can spray a cleaning liquid 160 toward the cleaning cloth 120 through a spray nozzle 130.

Here, the spray nozzle 130 may be disposed at the front end of the cleaning member 110 based on the direction of movement of the cleaning cloth 120, and further, if a plurality of cleaning members 110 are provided, the spray nozzle 130 may be disposed between each cleaning member 110.

The spray nozzle 130 may be, for example, a type that sprays the cleaning liquid 160 onto the cleaning cloth 120 in a spray manner, as shown in FIG. 2. At this time, the spray nozzle 130 may include, for example, a one-fluid nozzle and/or a two-fluid nozzle. When a one-fluid nozzle is employed in the spray nozzle 130, scattering of the cleaning liquid 160 can be prevented more effectively than in the case of a two-fluid nozzle.

The spray nozzle 130 can supply (spray) the cleaning liquid 160 to the surface opposite to the surface where the cleaning cloth 120 faces the rolling roll 10 (i.e., the surface where the cleaning cloth 120 comes into contact with the rolling roll 10), as shown in FIG. 2. In this case, when the cleaning cloth 120 supplied with the cleaning liquid 160 comes into contact with the rolling roll 10, the cleaning liquid 160 can be prevented from dripping onto the electrode 20 into liquid leakage, etc. Further, although not shown in detail in FIG. 2, the spray nozzle 130 can be connected to a cleaning liquid storage tank, a cleaning liquid transfer pipe, a pump, a valve, etc.

Moreover, the spray nozzle 130 may be provided in a plurality of numbers.

FIG. 2 illustrates a case where the spray nozzle 130 is disposed at the rear surface of the cleaning cloth 120 to supply the cleaning liquid 160 to the cleaning cloth 120. However, the present disclosure is not limited thereto, and the spray nozzle 130 may be disposed on the front surface or on both the front and rear surfaces of the cleaning cloth 120. That is, it is sufficient that the cleaning cloth 120 can supply cleaning liquid 160 to the extent that it can clean the electrode rolling roll 10, and various modifications and variations can be made to the embodiments. Here, the front surface of the cleaning cloth 120 means a surface that comes into contact with the electrode rolling roll 10, and the rear surface of the cleaning cloth 120 means a surface opposite to the surface that comes into contact with the electrode rolling roll 10.

In this case, the cleaning liquid 160 may be a distilled water.

According to the present disclosure, considering that the negative electrode uses water as a solvent, the oil as the previously used cleaning liquid has the problem that not only contaminants are not sufficiently cleaned, but also the cleaning time increases because it takes time for evaporation, and the like.

Thus, distilled water is used as the cleaning liquid 160 similarly to the solvent of the negative electrode, thereby solving the problem of using the oil, facilitating contaminant removal, and being efficient in terms of cost and time.

However, when distilled water is used as the cleaning liquid 160 as in the present disclosure, the sprayed amount of cleaning liquid 160 is very important.

This is because if the sprayed amount is too large, problems such as an increase in the thickness and moisture content of the electrode 20 and detachment of the active material may occur, and conversely, if the sprayed amount is too small, the surface contamination of the electrode rolling roll 10 is not sufficiently cleaned.

Therefore, according to the present disclosure, the amount of cleaning liquid 160 sprayed once by the spray nozzle 130 may be about 0.05 ml to 0.2 ml, specifically 0.05 ml to 0.1 ml, and more specifically 0.05 ml to 0.07 ml.

The amount of the cleaning liquid 160 sprayed is determined by a monitoring unit 170 that monitors the sprayed amount of the cleaning liquid 160, and a control unit 180 that receives information from the monitoring unit 170 and adjusts the sprayed amount of the cleaning liquid 160.

Specifically, the electrode rolling roll cleaning device according to the present disclosure further includes a monitoring unit 170. The monitoring unit 170 is a flow sensor installed at the front end of the spray nozzle 130 by way of one example, and can measure the flow rate of the cleaning liquid 160 sprayed at a flow rate that changes in real time, and transmit the information obtained therefrom to the control unit 180.

In this case, the sprayed amount is measured by the monitoring unit, and can be measured in a non-contact manner through an ultrasonic time-difference method that transmits ultrasonic waves in an upward/downward direction with respect to the spray direction of the cleaning liquid 160.

The control unit 180 can receive such information transmission from the monitoring unit 170, may issue a command so as to increase the amount of the cleaning liquid 160 sprayed by the spray nozzle if the amount is less than 0.05 ml, and issue a command so as to decrease the amount of the cleaning liquid if the amount exceeds 0.2 ml.

In this case, the control unit 180 may include a flow meter 181, and the flow meter 181 may measure the flow rate so as to precisely control the flow rate of the cleaning liquid 160 supplied to the spray nozzle 130 from the cleaning liquid storage tank that supplies the separate cleaning liquid 160 to the spray nozzle 130.

In addition, it goes without saying that the electrode rolling roll cleaning device may further include an inspection unit that measures the brightness value of the surface of the electrode rolling roll 10 to grasp the degree of contamination, a drying unit that heats and/or blows air to dry the surface of the electrode rolling roll 10 cleaned by the cleaning liquid 160, and the like.

Hereinafter, examples are disclosed to aid in understanding the present disclosure, and specifically, when a cleaning device according to the present disclosure is used and distilled water is used as a cleaning liquid, it is described through experimental examples to demonstrate that excellent cleaning properties are achieved regardless of the type of electrode rolling roll. However, it should be noted that the following examples are provided solely for illustrative purposes, and the scope of the present disclosure is not limited thereto.

### <Experimental Example 1>

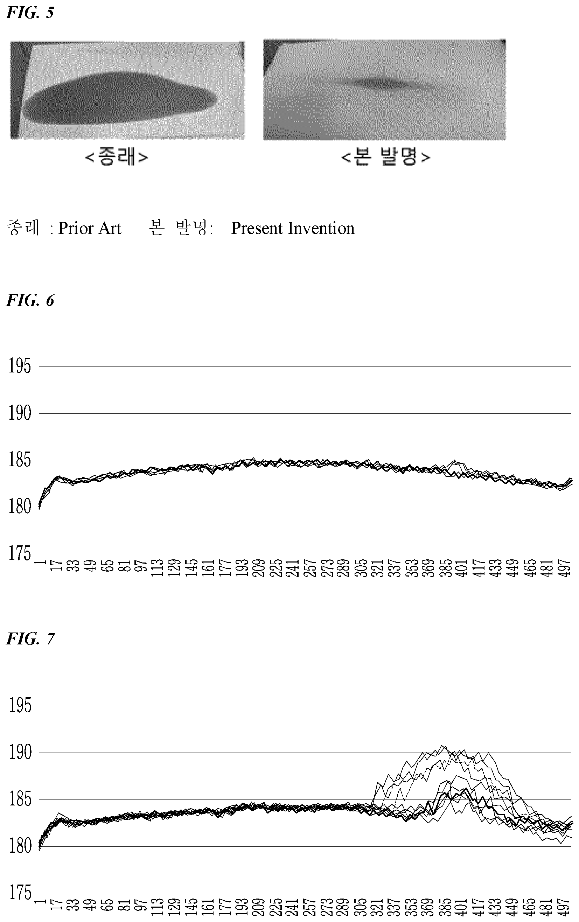

The attachment pressure, attachment uniformity, and cleaning liquid sprayed amount on the electrode rolling roll were measured using a conventional cleaning device (rolling roll full width attachment type, flat nozzle) and a cleaning device according to the present disclosure (rolling roll narrow width attachment type, spray type one-fluid nozzle), and the results are shown in Table 1 and FIGS. 4 and 5 below. At this time, distilled water (DI water) was used as the cleaning liquid.

At this time, the attachment pressure is the value obtained by converting the air pressure applied to the cylinder used to attach the cleaning member of the cleaning device to the electrode rolling roll into the force attached to the rolling roll (pressure x cross-sectional area of the inner diameter of the cylinder), and dividing it into the unit length (length in contact with the rolling roll), and
the sprayed amount of the cleaning liquid was measured by a flow sensor installed at the front end of the spray nozzle, and was measured through an ultrasonic time-difference method that transmits ultrasonic waves in the upward/downward direction relative to the spray direction of the cleaning liquid 160.

At this time, the measurement is performed at a temperature of -10 to 60 degrees Celsius, without freezing, and at a humidity in the range of 35 to 85% RH.

The vibration resistance of the flow sensor is 10 to 55 Hz, double amplitude is 1.5 mm, x/y/z direction: 2 hours, and impact resistance is 50 G, 11 ms, x/y/z directions: 3 times.

**[Table 1]**

| | Attachment pressure (kg/cm) | Sprayed amount of cleaning liquid (ml) |
|---|---|---|
| Cleaning device according to the prior art | 1.69 | 0.6 |
| Cleaning device according to the present disclosure | 1.94 | 0.06 |

Referring to Table 1 and FIGS. 4 and 5, it can be confirmed that the electrode rolling roll cleaning device according to the present disclosure has a smaller adhesion area between the rolling roll and the cleaning cloth than the cleaning device according to the prior art, so that the attachment uniformity is improved, and the attachment pressure is also improved.

In addition, it can be confirmed that the sprayed amount of the cleaning liquid is reduced to about 1/10.

### <Comparative Example 1>

A cleaning device (rolling roll full width attachment type, flat nozzle, one time sprayed amount: 0.6 ml) according to the prior art was used, and oil was used as the cleaning liquid. HCr (hard chrome rolling roll) was used as the electrode rolling roll.

### <Comparative Example 2>

A cleaning device (rolling roll narrow attachment type, spray one-fluid nozzle, one time sprayed amount: 0.06 ml) according to the present disclosure was used, but oil was used as the cleaning liquid. HCr (hard chrome rolling roll) was used as the electrode rolling roll.

### <Comparative Example 3>

A cleaning device (rolling roll full width attachment type, flat nozzle, one time sprayed amount: 0.6 ml) according to the prior art was used, and oil was used as the cleaning liquid. DLC (diamond like carbon rolling roll was used as the electrode rolling roll.

### <Comparative Example 4>

A cleaning device (rolling roll narrow attachment type, spray one-fluid nozzle, one time sprayed amount: 0.06 ml) according to the present disclosure was used, but oil was used as the cleaning liquid. DLC (diamond like carbon rolling roll) was used as the electrode rolling roll.

### <Example 1>

A cleaning device (narrow rolling roll attachment type, a spray one-fluid nozzle, one time sprayed amount: 0.06 ml) according to the present disclosure was used, but distilled water (DI water) was used as the cleaning liquid. HCr (hard chrome rolling roll) was used as the electrode rolling roll.

### <Example 2>

A cleaning device (narrow rolling roll attachment type, spray one-fluid nozzle, one time sprayed amount: 0.06 ml) according to the present disclosure was used, but distilled water (DI water) was used as the cleaning liquid. DLC (diamond like carbon rolling roll) was used as the electrode rolling roll.

### <Example 3>

This was prepared in the same manner as in Example 1, except that one time sprayed amount was adjusted to 0.08 ml.

### <Comparative Example 5>

This was prepared in the same manner as in Example 1, except that one time sprayed amount was adjusted to 0.03 ml.

### <Comparative Example 6>

This was prepared in the same manner as in Example 1, except that one time sprayed amount was adjusted to 0.25 ml.

### <Experimental Example 2>

The color difference values before and after cleaning of the electrode rolling rolls were compared to confirm the cleaning effect, and the results are shown in Table 2 below.

Here, the color difference value is measured using a chromaticity color difference meter (L*: perceived brightness (black/white)). In the case of HCr rolling rolls, as the color difference value is higher, the condition is clearer. In the case of DLC rolling rolls, the color difference value is lower, the condition is clearer.

**[Table 2]**

| | Before cleaning | After cleaning |
|---|---|---|
| Example 1 | 85.43 | 84.96 |
| Example 2 | 8.57 | 8.69 |
| Example 3 | 83.47 | 84.27 |
| Comparative Example 1 | 84.03 | 66.41 |
| Comparative Example 2 | 84.73 | 70.19 |
| Comparative Example 3 | 6.08 | 19.27 |
| Comparative Example 4 | 10.67 | 9.99 |
| Comparative Example 5 | 84.26 | 71.24 |
| Comparative Example 6 | 84.91 | 84.92 |

Referring to Table 2, in order to obtain an excellent cleaning effect regardless of the type of the electrode rolling roll, distilled water is used as the cleaning liquid while using the cleaning device of the present disclosure. However, it can be seen from Comparative Example 5 that the cleaning effect is reduced when the amount of distilled water sprayed is too small.

### <Experimental Example 3>

After cleaning the electrode rolling rolls according to Example 1 and Comparative Example 6, the thickness of the electrode rolled by the electrode rolling roll was measured, and the results are shown in FIGS. 6 and 7 below.

The thickness was measured using a thickness measuring device using a confocal sensor. In the method of measuring the thickness using a confocal sensor, one displacement sensor is present on the upper and lower sides, each sensor faces each other and shares a focus, and the two sensors sharing the focus are used to measure for a reference film (used as a scale of a confocal sensor) whose existing thickness is known, and the distance from each sensor to the reference film is calculated, and then the thickness is measured while moving the sensor in the widthwise direction of the electrode.

In regard to the electrode, artificial graphite is used as the negative electrode active material, and a negative electrode active material, a conductive material (CNT), styrenebutadiene rubber (SBR) as a binder, and carboxymethyl cellulose (CMC) as an additive were mixed in water at a weight ratio of 98:0.5:1:0.5 to prepare a negative electrode slurry, which was then applied to a 8 µm thick Cu foil in a thickness of about 185 µm, dried at 130°C, and then rolled to produce a negative electrode for use.

It can be seen that in the case of Example 1, the thickness does not differ significantly from when the negative electrode was first produced, but in the case of Comparative Example 6, cleaning was performed with a larger sprayed amount, so that cleaning was performed properly, but the undried distilled water affected the electrode moisture content, resulting in electrode surface defects and thickness changes.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

- 10:: electrode rolling roll
- 100:: electrode rolling roll cleaning device
- 110:: cleaning member
- 120:: cleaning cloth
- 130:: spray nozzle
- 140:: cleaning cloth supply unit
- 150:: cleaning cloth recovery unit
- 160:: cleaning liquid
- 170:: monitoring unit
- 180:: control unit
- 181:: flow meter

### Industrial Applicability

According to the present disclosure, distilled water is used as a cleaning liquid at the time of cleaning the electrode rolling roll, and therefore, when water is used as a solvent for the electrode, the cleaning of the electrode rolling roll is facilitated.

In addition, a spray type one-fluid nozzle is used, and the sprayed amount of distilled water as the cleaning liquid is adjusted to a very small amount, thereby eliminating problems such as an increase in electrode thickness and moisture content, and detachment of active materials, which may occur due to the use of distilled water as a cleaning liquid in a conventional case.

The effects of the present disclosure are not limited to the effects mentioned above, and additional other effects not described above will be clearly understood from the description of the appended claims by those skilled in the art.

## Claims

1. A device for cleaning an electrode rolling roll, comprising:
a cleaning member provided so as to allow a surface of the electrode rolling roll to come into contact with a cleaning cloth,
a spray nozzle that sprays a cleaning liquid onto the cleaning cloth,
a control unit that adjusts the sprayed amount of the cleaning liquid, and
a monitoring unit that monitors the sprayed amount of the cleaning liquid,
wherein the cleaning liquid is a distilled water, and
wherein the control unit adjusts the amount of the cleaning liquid sprayed once by the spray nozzle so as to be within a range of 0.05 ml to 0.2 ml.

2. The device for cleaning an electrode rolling roll according to claim 1, wherein:
the electrode rolling roll comprises an upper rolling roll located on the upper side and a lower rolling roll located on the lower side, on the basis of the electrode.

3. The device for cleaning an electrode rolling roll according to claim 1, wherein:
the electrode rolling roll is a hard chrome rolling roll, or a DLC (diamond like carbon) rolling roll.

4. The device for cleaning an electrode rolling roll according to claim 1, wherein:
the cleaning cloth is a non-woven fabric.

5. The device for cleaning an electrode rolling roll according to claim 1, wherein:
the cleaning member comes into contact with the cleaning cloth at 20 to 60% of the total width length based on the widthwise direction of the electrode rolling roll.

6. The device for cleaning an electrode rolling roll according to claim 1, wherein:
the cleaning member has an attachment pressure of 1.7 kg/cm to 2.0 kg/cm when a cleaning cloth is attached to the electrode rolling roll.

7. The device for cleaning an electrode rolling roll according to claim 1, wherein:
the spray nozzle is a spray-type one-fluid nozzle.

8. The device for cleaning an electrode rolling roll according to claim 1, wherein:
the control unit adjusts the amount of the cleaning liquid sprayed once by the spray nozzle so as to be within the range of 0.05 ml to 0.1 ml.

9. The device for cleaning an electrode rolling roll according to claim 1, wherein:
the control unit comprises a flow meter, and adjusts the amount of the cleaning liquid sprayed by the spray nozzle, which issues a command so as to increase the amount of the cleaning liquid if the amount is less than 0.05 ml, and issues a command so as to decrease the amount of the cleaning liquid if the amount exceeds 0.2 ml.

10. The device for cleaning an electrode rolling roll according to claim 1, wherein:
the monitoring unit monitors the amount of cleaning liquid sprayed by the spray nozzle and transmits information to the control unit.

11. The device for cleaning an electrode rolling roll according to claim 1, further comprising:
a cleaning cloth supply unit that supplies the cleaning cloth; and
a cleaning cloth recovery unit that recovers the cleaning cloth.
